# EUROPEAN PATENT SPECIFICATION

(11) **EP 2 696 395 B1**
(45) Date of publication and mention of the grant of the patent: **22.11.2017**
(21) Application number: 11863245.4
(22) Date of filing: 01.12.2011
(51) Int. Cl.: H01M 2/16, H01M 2/18, H01M 10/052

(54) **SEPARATOR AND ELECTROCHEMICAL DEVICE INCLUDING SAME**
SEPARATOR UND ELEKTROCHEMISCHE VORRICHTUNG DAMIT
SÉPARATEUR ET DISPOSITIF ÉLECTROCHIMIQUE LE COMPORTANT

(30) Priority: 06.04.2011 KR 20110031829; 30.11.2011 KR 20110127155
(43) Date of publication of application: 12.02.2014
(73) Proprietor: LG Chem, Ltd., Seoul 150-721 (KR); Toray Battery Separator Film Co., Ltd., Tochigi, 329-2763 (JP)
(72) Inventor: LEE, Joo-Sung, Daejeon 305-770 (KR); HA, Jeong-Min, Daejeon 302-318 (KR); JIN, Sun-Mi, Daejeon 305-761 (KR); RYU, Bo-Kyung, Daejeon 305-380 (KR); KIM, Jong-Hun, Daejeon 302-120 (KR)
(74) Representative: Goddar, Heinz J.
(86) International application number: PCT/KR2011/009266
(87) International publication number: WO 2012/138039

(56) References cited:
- EP-A1- 1 659 650
- EP-A1- 1 935 621
- EP-A2- 0 849 819
- WO-A2-2009/053862
- DE-A1-102009 055 944
- JP-A- 2006 049 114
- KR-A- 20030 010 406
- KR-A- 20060 063 751
- KR-A- 20070 000 231
- KR-A- 20090 083 854
- US-A1- 2007 054 183
- US-A1- 2011 064 988
- BESENHARD J O ED - BESENHARD J O (ED): "Handbook of battery materials", 1 January 1999 (1999-01-01), HANDBOOK OF BATTERY MATERIALS, WEINHEIM : WILEY - VCH, DE, PAGE(S) 245 - 292, XP002230615, ISBN: 978-3-527-29469-5 * sections 9.1.2, 9.1.2.1, 9.1.2.2 and 9.2.2.1 *

## Description

### TECHNICAL FIELD

The present disclosure relates to a separator including a porous coating layer into which a continuous or discontinuous patterned layer is introduced to allow an electrolyte solution to permeate therethrough, achieving improved impregnation with the electrolyte solution, and an electrochemical device including the separator.

### BACKGROUND ART

Recently, there has been growing interest in energy storage technologies. As the application fields of energy storage technologies have been extended to mobile phones, camcorders, notebook computers and even electric cars, efforts have increasingly been made towards the research and development of electrochemical devices. In this aspect, electrochemical devices have attracted the most attention. The development of secondary batteries capable of repeatedly charging and discharging has been the focus of particular interest. In recent years, extensive research and development has been conducted to design new electrodes and batteries for the purpose of improving capacity density and specific energy of the batteries.

Many secondary batteries are currently available. Lithium secondary batteries developed in the early 1990's have received a great deal of attention due to their advantages of higher operating voltages and much higher energy densities than conventional batteries using aqueous electrolyte solutions, such as Ni-MH batteries, Ni-Cd batteries and H₂SO₄-Pb batteries. However, such lithium ion batteries suffer from safety problems, such as fire or explosion, encountered with the use of organic electrolytes and are disadvantageously complicated to fabricate. In attempts to overcome the disadvantages of lithium ion batteries, lithium ion polymer batteries have been developed as next-generation batteries. However, additional research is still urgently needed to improve the relatively low capacities and insufficient low-temperature discharge capacities of lithium ion polymer batteries in comparison with lithium ion batteries.

Many companies have produced a variety of electrochemical devices with different safety characteristics. It is very important to ensure the safety of such electrochemical devices. The most important consideration for safety is that operational failure or malfunction of electrochemical devices should not cause injury to users. For this purpose, safety regulations strictly prohibit the dangers (such as fire and smoke) of electrochemical devices. In connection with the safety characteristics of a lithium secondary battery including a separator, overheating of the lithium secondary battery may cause thermal runaway or puncture of the separator may pose an increased risk of explosion. In particular, a porous polyolefin substrate commonly used as a separator of a lithium secondary battery undergoes extreme thermal shrinkage at a temperature of 100 °C or higher due to its material characteristics and production processes including elongation. This thermal shrinkage behavior may cause short circuits between a cathode and an anode.

Various proposals have been made to solve the above safety problems of electrochemical devices. For example, Korean Unexamined Patent Publication No. 10-2007-231 or US 2011/0064988 A1 discloses a separator which includes a porous organic-inorganic coating layer formed by coating a mixture of inorganic particles and a binder polymer on at least one surface of a porous substrate. However, it takes a long time for an electrolyte solution to be impregnated into the separator including the porous organic-inorganic coating layer because the separator exhibits a low affinity for the electrolyte solution. The impregnation of the separator with an electrolyte solution is particularly time-consuming in a large-capacity electrochemical device, which makes the fabrication of the electrochemical device difficult. Accordingly, there is an urgent need to improve the impregnation properties of separators with electrolyte solutions.

JP 2006 049114 A discloses a separator having grooves for electrolyte impregnation in the porous coating layer.

US 2007/0054183 A1 discloses a separator having a gel polymer layer coated on it to improve electrolyte impregnation.

### DISCLOSURE

### Technical Problem

The present disclosure is designed to solve the problems of the prior art, and therefore it is an object of the present disclosure to provide a separator with excellent impregnation properties including a porous organic-inorganic coating layer, and an electrochemical device including the separator.

### Technical Solution

In order to achieve the above object, there is provided a separator according to claim 1. A preferred material for the porous polyolefin substrate is selected from the group consisting of polyethylene, polypropylene, polybutylene and polypentene.

The inorganic particles may be selected from the group consisting of inorganic particles having a dielectric constant of at least 5, inorganic particles having the ability to transport lithium ions, and mixtures thereof. There is no particular restriction on the kind of the inorganic particles having a dielectric constant of at least 5. As the inorganic particles having a dielectric constant of at least 5, preferred are BaTiO₃, Pb(Zrₓ,Ti₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})O₃₋ₓPbTiO₃ (PMN-PT, 0 < x < 1), hafnia (HfO₂), SrTiO₃, SnO₂, CeO₂, MgO, NiO, CaO, ZnO, ZrO₂, SiO₂, Y₂O₃, Al₂O₃, SiC or TiO₂ particles. Examples of the inorganic particles having the ability to transport lithium ions include, but are not limited to, lithium phosphate (Li₃PO₄) particles, lithium titanium phosphate (LiₓTi_{y}(PO₄)₃, 0 < x < 2, 0 < y < 3) particles, lithium aluminum titanium phosphate (LiₓAl_{y}Ti_{z}(PO₄)₃, 0 < x < 2, 0 < y < 1, 0 < z < 3) particles, (LiAlTiP)ₓO_{y}, type glass (0 < x < 4, 0 < y < 13) particles, lithium lanthanum titanate (LiₓLa_{y}TiO₃, 0 < x < 2, 0 < y < 3) particles, lithium germanium thiophosphate (LiₓGe_{y}P_{z}S_{w}, 0 < x < 4, 0 < y < 1, 0 < z < 1, 0 < w < 5) particles, lithium nitride (LiₓN_{y}, 0 < x < 4, 0 < y < 2) particles, SiS₂ type glass (LiₓSi_{y}S_{z}, 0 < x < 3, 0 < y < 2, 0 < z < 4) particles, and P₂S₅ type glass (LiₓP_{y}S_{z}, 0 < x < 3, 0 < y < 3, 0 < z < 7) particles.

There is no particular restriction on the kind of the binder polymer. For example, the binder polymer may be polyvinylidene fluoride-co-hexafluoropropylene, polyvinylidene fluoride-co-trichloroethylene, polymethyl methacrylate, polybutyl acrylate, polyacrylonitrile, polyvinylpyrrolidone, polyvinyl acetate, polyvinyl alcohol, polyethylene-co-vinyl acetate, polyethylene oxide, polyarylate, styrene butadiene rubber, cellulose acetate, cellulose acetate butyrate, cellulose acetate propionate, cyanoethylpullulan, cyanoethyl polyvinyl alcohol, cyanoethyl cellulose, cyanoethyl sucrose, pullulan, carboxymethyl cellulose, or a low molecular weight compound having a molecular weight of 10,000 g/mol or lower.

Preferably, the inorganic particles and the binder polymer are used in a weight ratio of 50:50 to 99:1.

The separator of the present disclosure is suitable for use in an electrochemical device including a cathode and an anode. The separator of the present disclosure is interposed between the cathode and the anode of the electrochemical device. Particularly, the separator of the present disclosure can be used in a lithium secondary battery.

### Advantageous Effects

A continuous or discontinuous patterned layer formed with continuous grooves is formed on the porous coating layer of the separator according to the present disclosure to allow an electrolyte solution to permeate therethrough. Due to this structure, the wettability of the separator with an electrolyte solution is improved, shortening the time needed to impregnate the electrolyte solution into the separator. In addition, the formation of the porous coating layer makes the separator of the present disclosure highly resistant to heat.

### DESCRIPTION OF DRAWINGS

The accompanying drawings illustrate preferred embodiments of the present disclosure and, together with the foregoing disclosure, serve to provide further understanding of the technical spirit of the present disclosure. However, the present disclosure is not to be construed as being limited to the drawings.
FIG. 1 is a perspective view of a separator including a porous coating layer formed with grooves according to an embodiment of the present disclosure.
FIG. 2 is a cross-sectional view of a separator including a porous coating layer formed with grooves according to an embodiment of the present disclosure.
FIG. 3 is an image of a separator including a porous coating layer formed with grooves produced in Example 1.
FIG. 4 is a SEM image showing the border of a groove formed in a porous coating layer of a separator produced in Example 1.
FIG. 5 is a SEM image showing the border of a groove formed in a porous coating layer of a separator produced in Example 2.

### MODE FOR DISCLOSURE

Hereinafter, preferred embodiments of the present disclosure will be described in detail with reference to the accompanying drawings.

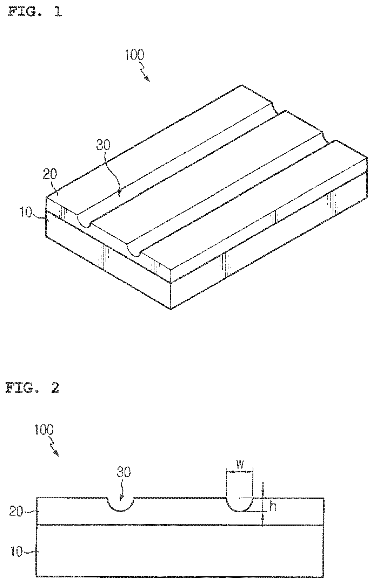

A separator according to a preferred embodiment of the present disclosure is illustrated in FIGS. 1 and 2. However, the description proposed herein is just a preferable example for the purpose of illustrations only, not intended to limit the scope of the disclosure, so it should be understood that other equivalents and modifications could be made within the scope of the claims. The present disclosure provides a separator including: a porous substrate; and a porous coating layer formed on at least one surface of the porous substrate and including a mixture of inorganic particles and a binder polymer.

There is no particular restriction on the kind of the porous substrate. As the porous substrate, there may be used, for example, a membrane or a non-woven fabric. The porous substrate is a porous polyolefin substrate. A preferred material for the porous polyolefin substrate is selected from the group consisting of polyethylene, polypropylene, polybutylene and polypentene. In the porous coating layer, the binder polymer attaches (that is, connects and fixes) the inorganic particles to each other so as to maintain a state in which the inorganic particles are bound to each other. Another function of the binder polymer is to maintain a state in which the porous coating layer is bound to the porous substrate. The inorganic particles of the porous coating layer are in substantial contact with each other and exist in a packed structure. Interstitial volumes created between the inorganic particles in contact with each other become pores of the porous coating layer.

The separator including the porous coating layer is interposed between electrodes to fabricate an electrochemical device. Since the porous substrate and the porous coating layer of the separator have a low affinity for an electrolyte solution, it takes much time for the electrolyte solution to be impregnated into the electrochemical device. Thus, a continuous or discontinuous patterned layer is introduced through which an electrolyte solution permeates the surface of the porous coating layer to shorten the time for impregnation with the electrolyte solution. The term "continuous" means that the pattern consists of completely closed polygons or irregular figures on the porous substrate. The term "discontinuous" means that the pattern consists of unclosed polygons or irregular figures or the patterned layer is formed on a portion of the porous substrate although the pattern consists of closed polygons or irregular figures. So long as the patterned layer acts as a path through which an electrolyte solution permeates, it may be modified into any form suitable for achieving the object of the present disclosure. The patterned layer consists of continuous grooves.

Referring to FIG. 1, the separator 100 of the present disclosure includes a porous substrate 10 and a porous coating layer formed on at least one surface of the porous substrate 10 and having continuous grooves 30 through which an electrolyte solution permeates to improve the impregnation with the electrolyte solution. The grooves are in the form of continuous, concave and elongated lines from one cut surface of the separator to the opposite cut surface thereof. An electrolyte solution permeates through the continuous grooves 30 exposed to the edges of an electrochemical device and can easily reach inside the separator. That is, the grooves help to impregnate the separator with the electrolyte solution. The cross-sectional shape of the grooves is not particularly limited and may vary depending on the formation method thereof. For example, the grooves may be triangular, quadrangular or semicircular in cross section. For effective impregnation of the separator with an electrolyte solution, the patterned layer consists of continuous grooves.

Referring to FIG. 2, the depth h of the grooves is from 1 to 20% of the sum of the thicknesses of the porous coating layer and the patterned layer (the two layers together indicated by reference sign 20). If the grooves are deeper than 20% of the thickness of the porous coating layer, the mechanical properties of the porous coating layer may be impaired, resulting in deterioration of heat resistance, and the separator may be wrinkled due to an irregular thickness variation of the porous coating layer. Meanwhile, if the grooves are shallower than 1% of the thickness of the porous coating layer, an electrolyte solution is difficult to permeate through the porous coating layer. The width w of the grooves is from 0.1 to 50 mm. If the grooves are narrower than 0.1 mm, an electrolyte solution is difficult to infiltrate the porous coating layer, making it difficult to expect an improvement in wettability with the electrolyte solution. Meanwhile, if the grooves are wider than 50 mm, there is the risk that the separator may be wrinkled.

The inorganic particles are not specially limited so long as they are electrochemically stable. In other words, the inorganic particles can be used without particular limitation in the present disclosure if they do not undergo oxidation and/or reduction in an operating voltage range applied to an electrochemical device (for example, 0-5 V for Li/Li⁺). In particular, the use of inorganic particles having the ability to transport ions can improve the conductivity of ions in an electrochemical device, leading to an improvement in the performance of the electrochemical device.

The use of inorganic particles having a high dielectric constant can contribute to an increase in the degree of dissociation of an electrolyte salt, for example, a lithium salt, in a liquid electrolyte to improve the ionic conductivity of the electrolyte solution.

For these reasons, it is preferred that the inorganic particles are selected from inorganic particles having a dielectric constant of at least 5, preferably at least 10, inorganic particles having the ability to transport lithium ions, and mixtures thereof.

Non-limiting examples of inorganic particles having a dielectric constant of at least 5 include BaTiO₃, Pb(Zrₓ,Ti₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})O₃₋ₓPbTiO₃ (PMN-PT, 0 < x < 1), hafnia (HfO₂), SrTiO₃, SnO₂, CeO₂, MgO, NiO, CaO, ZnO, ZrO₂, Y₂O₃, Al₂O₃, SiC and TiO₂ particles. These inorganic particles may be used alone or as a mixture of two or more thereof.

Particularly preferred are BaTiO₃, Pb(ZrₓTi₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})O₃-xPbTiO₃ (PMN-PT, 0 < x < 1) and hafnia (HfO₂) whose dielectric constants are 100 or higher that have piezoelectricity to protect both electrodes from internal short circuits when an external impact is applied, achieving improved safety of an electrochemical device. Piezoelectricity is a phenomenon in which charges are created as a result of tension or compression under a certain pressure to generate a potential difference between opposite sides. The use of a mixture of the inorganic particles having a high dielectric constant and the inorganic particles having the ability to transport lithium ions will produce enhanced synergistic effects.

The inorganic particles having the ability to transport lithium ions refer to those that contain lithium atoms and have the function of transferring lithium ions without storing the lithium. The inorganic particles having the ability to transport lithium ions contain defects in their structure through which lithium ions can be transferred and moved. Due to the presence of the defects, the conductivity of lithium ions in a battery can be improved, resulting in improved battery performance. Non-limiting examples of the inorganic particles having the ability to transport lithium ions include lithium phosphate (Li₃PO₄) particles, lithium titanium phosphate (LiₓTi_{y}(PO₄)₃, 0 < x < 2, 0 < y < 3) particles, lithium aluminum titanium phosphate (LiₓAl_{y}Ti_{z}(PO₄)₃, 0 < x < 2, 0 < y < 1, 0 < z < 3) particles, (LiAlTiP)ₓO_{y}, type glass (0 < x < 4, 0 < y < 13) particles such as 14Li₂O-9Al₂O₃-38TiO₂-39P₂O₅ particles, lithium lanthanum titanate (LiₓLa_{y}TiO₃, 0 < x < 2, 0 < y < 3) particles, lithium germanium thiophosphate (LiₓGe_{y}P_{z}S_{w}, 0 < x < 4, 0 < y < 1, 0 < z < 1, 0 < w < 5) particles such as Li_{3.25}Ge_{0.25}P_{0.75}S₄ particles, lithium nitride (LiₓN_{y}, 0 < x < 4, 0 < y < 2) particles such as Li₃N particles, SiS₂ type glass (LiₓSi_{y}S_{z}, 0 < x < 3, 0 < y < 2, 0 < z < 4) particles such as Li₃PO₄-Li₂S-SiS₂ particles, and P₂S₅ type glass (LiₓP_{y}S_{z}, 0 < x < 3, 0 < y < 3, 0 < z < 7) particles such as LiI-Li₂S-P₂S₅ particles. These inorganic particles may be used alone or as a mixture thereof.

The size of the inorganic particles present in the porous coating layer is not limited but is preferably in the range of 0.001 to 10 µm. If the inorganic particles are smaller than 0.001 µm, the dispersibility of the inorganic particles may deteriorate, which makes it difficult to control the physical properties of the separator. Meanwhile, if the inorganic particles are larger than 10 µm, the mechanical properties of the separator may deteriorate.

Preferably, the binder polymer is used in an amount of 1 to 50% by weight, based on the inorganic particles. If the amount of the binder polymer used is less than 1% by weight, the inorganic particles cannot be sufficiently bound to each other. Meanwhile, if the amount of the binder polymer used exceeds 50% by weight, the porosity of the porous coating layer may be lowered, resulting in deterioration of wettability with an electrolyte solution.

There is no particular restriction on the kind of the binder polymer. For example, the binder polymer may be polyvinylidene fluoride-co-hexafluoropropylene, polyvinylidene fluoride-co-trichloroethylene, polymethyl methacrylate, polybutyl acrylate, polyacrylonitrile, polyvinylpyrrolidone, polyvinyl acetate, polyvinyl alcohol, polyethylene-co-vinyl acetate, polyethylene oxide, polyarylate, styrene butadiene rubber, cellulose acetate, cellulose acetate butyrate, cellulose acetate propionate, cyanoethylpullulan, cyanoethyl polyvinyl alcohol, cyanoethyl cellulose, cyanoethyl sucrose, pullulan, carboxymethyl cellulose, or a low molecular weight compound having a molecular weight of 10,000 g/mol or lower.

The separator of the present disclosure can be produced by the following procedures.

The binder polymer is dissolved in a solvent. The inorganic particles are mixed with the solution of the binder polymer to prepare a slurry. The slurry is primarily applied to the surface of the porous substrate to form a porous coating layer, and the binder polymer solution is secondarily coated on the porous coating layer to form continuous grooves. The binder polymer solution may optionally include the inorganic particles. The binder polymer may be used in a molten state. No particular limitation is imposed on the method for coating the slurry. That is, the slurry may be coated by methods generally used in the art. For example, the slurry and the binder may be sequentially coated by various methods, such as dip-dip coating, dip-slot coating, dip-slide coating, dip-roll printing, dip-micro gravure coating, dip-spray coating, dip-inkjet coating, slot-slot coating, slot-slide coating, slot-roll printing, slot-micro gravure coating, slot-spray coating and slot-inkjet spray coating. On the other hand, the slurry and the binder may be simultaneously coated by various methods, such as multilayer slot die coating, multilayer slide-slot coating and multilayer slide coating. In the sequential coating for the formation of a pattern shape, after the primary application of the slurry, it is particularly preferred to perform the secondary coating by slot coating, slide coating, roll printing, micro gravure coating, spray coating, inkjet spray coating, etc. For simultaneous coating of the slurry and the binder, multilayer slot die coating, multilayer slide-slot coating or multilayer slide coating is preferred.

The binder polymer may be as mentioned above.

The separator of the present disclosure is suitable for use in an electrochemical device. That is, the separator of the present disclosure can be interposed between a cathode and an anode of an electrochemical device. The electrochemical device includes all devices in which electrochemical reactions occur. Specific examples of such electrochemical devices include all kinds of primary batteries, secondary batteries, fuel cells, solar cells, and capacitors such as supercapacitors. Particularly preferred are lithium secondary batteries, including lithium metal secondary batteries, lithium ion secondary batteries, lithium polymer secondary batteries and lithium ion polymer secondary batteries.

The electrochemical device can be fabricated by suitable methods known in the art. In an embodiment, the electrochemical device may be fabricated by interposing the separator between a cathode and an anode, assembling the electrode structure, and injecting an electrolyte solution into the electrode assembly.

There is no particular restriction on the production method of the cathode and the anode to be applied together with the separator of the present disclosure. Each of the electrodes can be produced by binding an electrode active material to an electrode current collector by suitable methods known in the art. The cathode active material may be any of those that are commonly used in cathodes of conventional electrochemical devices. Non-limiting examples of particularly preferred cathode active materials include lithium manganese oxides, lithium cobalt oxides, lithium nickel oxides, lithium iron oxides, and lithium composite oxides thereof. The anode active material may be any of those that are commonly used in anodes of conventional electrochemical devices. Non-limiting examples of particularly preferred anode active materials include lithium, lithium alloys, and lithium intercalation materials, such as carbon, petroleum coke, activated carbon, graphite and other carbon materials. Non-limiting examples of cathode current collectors suitable for use in the cathode include aluminum foils, nickel foils, and combinations thereof. Non-limiting examples of anode current collectors suitable for use in the anode include copper foils, gold foils, nickel foils, copper alloy foils, and combinations thereof.

The electrochemical device can use an electrolyte solution consisting of a salt and an organic solvent capable of dissolving or dissociating the salt. The salt has a structure represented by A⁺B⁻ wherein A⁺ is an alkali metal cation, such as Li⁺, Na⁺, K⁺ or a combination thereof, and B⁻ is an anion, such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof. Examples of organic solvents suitable for dissolving or dissociating the salt include, but are not limited to, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC) and γ-butyrolactone. These organic solvents may be used alone or as a mixture thereof.

The electrolyte solution may be injected in any suitable step during fabrication of the battery depending on the manufacturing processes and desired physical properties of a final product. Specifically, the electrolyte solution may be injected before battery assembly or in the final step of battery assembly.

The separator of the present disclosure may be interposed between the cathode and the anode of the secondary battery. When it is intended to assemble a plurality of cells or electrodes to construct an electrode assembly, the separator of the present disclosure may be interposed between the adjacent cells or electrodes. The electrode assembly may have various structures, such as simple stack, jelly-roll and stack-folding types.

In an embodiment, an electrode assembly may be constructed by interposing the separator of the present disclosure between a cathode and an anode, to which corresponding active materials are applied, and continuously winding the cathode/separator/anode structure. Alternatively, an electrode assembly may be constructed by bending the cathode/separator/anode structure at regular intervals so as to have a zigzag folded shape. For higher capacity, the wound or bent electrode assembly may include a plurality of electrodes and separators laminated alternately.

In another embodiment, an electrode assembly may be constructed by laminating cathode/separator/anode or anode/separator/cathode structures as repeating units. Each of the separators of the electrode assembly may be the separator of the present disclosure.

In an embodiment, an electrode assembly may be constructed by assembling a plurality of unit cells having a full cell or bicell structure with a folding film. The folding film may be a general insulating film or the separator of the present disclosure. The full cell structure refers to a cell structure including at least one cell structure in which a separator is interposed between electrodes having opposite polarities and the outermost electrodes have polarities opposite to each other. Examples of such full cell structures include cathode/separator/anode and cathode/separator/anode/separator/cathode/separator/anode structures. The bicell structure refers to a cell structure including at least one cell structure in which a separator is interposed between electrodes having opposite polarities and the outermost electrodes have the same polarity. Examples of such bicell structures include cathode/separator/anode/separator/cathode and anode/separator/cathode/separator/anode structures.

Many methods are possible to assemble unit cells using folding films. As an example, an electrode assembly may be constructed by arranging a plurality of unit cells at predetermined intervals on one surface of a folding film extending in the lengthwise direction, and winding the folding film together with the unit cells in one direction. The electrode assembly has a structure in which the unit cells are inserted into a space defined by the wound folding film. As another example, an electrode assembly may be constructed by arranging a plurality of unit cells at predetermined intervals on both surfaces of a folding film extending in the lengthwise direction, and winding the folding film together with the unit cells in one direction. The electrode assembly thus constructed has a structure in which the unit cells are inserted into a space defined by the wound folding film. The intervals between the arranged unit cells and the polarities of the outermost electrodes of each unit cell are selected such that the electrode of the upper cell in contact with the folding film has a polarity opposite to that of the electrode of the lower cell in contact with the folding film. As an example, the intervals between the arranged unit cells and the polarities of the outermost electrodes of each unit cell may be selected such that the electrode assembly has a cathode/separator/anode/folding film/cathode/separator/anode/folding film/cathode··· structure.

As another example, an electrode assembly may be constructed by arranging a plurality of unit cells at predetermined intervals on one surface of a folding film extending in the lengthwise direction, and bending the folding film together with the unit cells in a zigzag configuration to arrange the unit cells between the bent portions of the folding film. The electrode assembly thus constructed has a structure in which the unit cells are inserted into the bent and laminated portions of the folding film. As another example, an electrode assembly may be constructed by arranging a plurality of unit cells at predetermined intervals on both surfaces of a folding film extending in the lengthwise direction, and bending the folding film together with the unit cells in a zigzag configuration to arrange the unit cells between the bent portions of the folding film. The electrode assembly thus constructed has a structure in which the unit cells are inserted into the bent and laminated portions of the folding film. The intervals between the arranged unit cells and the polarities of the outermost electrodes of each unit cell are selected such that the electrode of the upper cell in contact with the folding film has a polarity opposite to that of the electrode of the lower cell in contact with the folding film. As an example, the intervals between the arranged unit cells and the polarities of the outermost electrodes of each unit cell may be selected such that the electrode assembly has a cathode/separator/anode/folding film/cathode/separator/anode/folding film/cathode··· structure.

Many methods are possible to assemble unit cells using folding films. As an example, an electrode assembly may be constructed by arranging an anode, a cathode, an anode, a cathode... alternately in this order on one surface of a folding film, and winding the folding film together with the electrodes in one direction. The electrode assembly thus constructed has a structure in which the electrodes are inserted into a space defined by the wound folding film. As another example, an electrode assembly may be constructed by arranging a plurality of electrodes at predetermined intervals on both surfaces of a folding film extending in the lengthwise direction, and winding the folding film together with the electrodes in one direction. The electrode assembly thus constructed has a structure in which the electrodes are inserted into a space defined by the wound folding film. The intervals between the arranged electrodes and the polarities of the electrodes are selected such that the upper electrodes in contact with the folding film have polarities opposite to those of the lower electrodes in contact with the folding film. As an example, the intervals between the arranged unit cells and the polarities of the electrodes may be selected such that the electrode assembly has a cathode/folding film/anode/folding film/cathode··· structure.

As another example, an electrode assembly may be constructed by arranging an anode, a cathode, an anode, a cathode... alternately in this order on one surface of a folding film, and bending the folding film together with the electrodes in one direction to arrange the electrodes between the bent portions of the folding film. The electrode assembly thus constructed has a structure in which the electrodes are inserted between the bent and laminated portions of the folding film. As another example, an electrode assembly may be constructed by arranging a plurality of electrodes at predetermined intervals on both surfaces of a folding film extending in the lengthwise direction, and bending the folding film together with the electrodes to arrange the electrodes between the bent portions of the folding film. The electrode assembly thus constructed has a structure in which the electrodes are inserted between the bent and laminated portions of the folding film. The intervals between the arranged electrodes and the polarities of the electrodes are selected such that the upper electrodes in contact with the folding film have polarities opposite to those of the lower electrodes in contact with the folding film. As an example, the intervals between the arranged electrodes and the polarities of the electrodes may be selected such that the electrode assembly has a cathode/folding film/anode/folding film/cathode··· structure.

On the other hand, the length of each of the folding films used for the construction of the electrode assemblies may be selected so as to wrap the electrode assembly at least once after assembly of the last unit cell or electrode by the method explained above. The electrode assemblies may be modified into various different forms and the scope of the present disclosure is not limited thereto.

### MODE FOR DISCLOSURE

Hereinafter, embodiments of the present disclosure will be described in detail. The embodiments of the present disclosure, however, may take several other forms, and the scope of the present disclosure should not be construed as being limited to the following examples. The embodiments of the present disclosure are provided to more fully explain the present disclosure to those having ordinary knowledge in the art to which the present disclosure pertains.

### EXAMPLES

### Example 1: Production of separator including porous coating layer formed with grooves

Polyvinylidene fluoride-co-chlorotrifluoroethylene (PVdF-CTFE) and cyanoethylpullulan in a weight ratio of 10:2 were added to and dissolved in acetone at 50 °C for about 12 hr. Al₂O₃ powder was added to the polymer solution such that the ratio of the weight of the polymers to the weight of the inorganic particles was 5:95. The inorganic particles were crushed and dispersed in the solution by ball milling for 12 hr to prepare a slurry. The inorganic particles of the slurry had an average particle size of 600 nm.

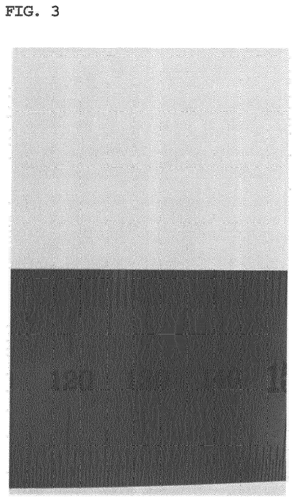

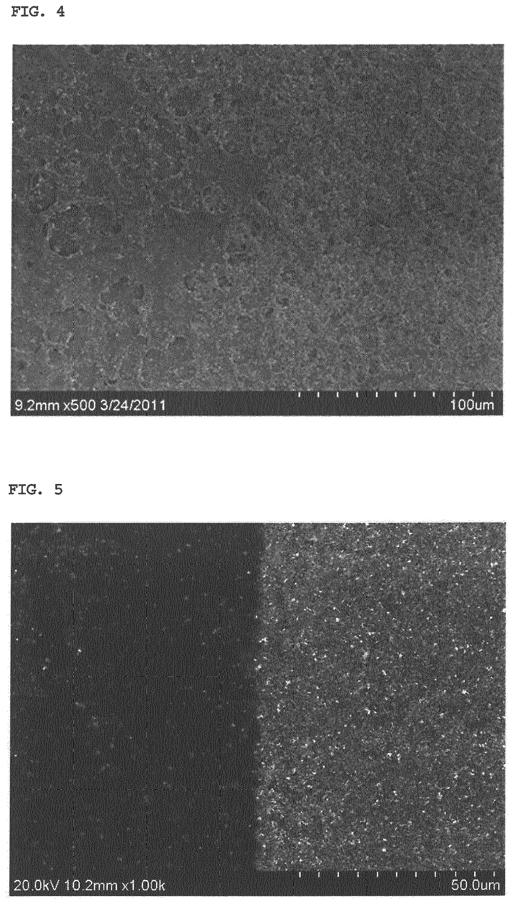

The slurry was continuously supplied and coated to a thickness of 4 µm on a 16 µm thick porous polyolefin membrane (C210, Celgard) as a substrate by using a multilayer slot coater to form a lower coating layer, and then a solution of 4 wt% of PVdF-CTFE in acetone was coated on the lower coating layer while passing through diaphragms in 12 mm wide slits to form uncoated portions having grooves in the form of stripes. The areas coated with the binder solution had a thickness of 0.5 µm. That is, the depth of the grooves corresponds to 11% of the total thickness of the porous coating layer. The grooves had a width of 11 mm. The grooves in the form of stripes are shown in FIG. 3. FIG. 4 is a SEM image showing the border of one of the grooves.

### Example 2: Production of separator including porous coating layer formed with grooves

A separator was produced in the same manner as in Example 1, except that a solution of 5 wt% of styrene butadiene rubber (SBR) in water was coated on the lower coating layer formed on a 16 µm thick porous polyolefin membrane (C210, Celgard) as a substrate by using a multilayer slot coater to form an upper coating layer formed with grooves. FIG. 5 is a SEM image showing the border of one of the grooves.

### Comparative Example 1: Production of separator including porous coating layer formed with no groove

Polyvinylidene fluoride-co-chlorotrifluoroethylene (PVdF-CTFE) and cyanoethylpullulan in a weight ratio of 10:2 were added to and dissolved in acetone at 50 °C for about 12 hr. Al₂O₃ powder was added to the polymer solution such that the ratio of the weight of the polymers to the weight of the inorganic particles was 5:95. The inorganic particles were crushed and dispersed in the solution by ball milling for 12 hr to prepare a slurry. The inorganic particles of the slurry had an average particle size of 600 nm.

The slurry was continuously supplied and coated to a thickness of 4 µm on a 16 µm thick porous polyolefin membrane (C210, Celgard) as a substrate by using a multilayer slot coater to form a lower coating layer, and then a solution of 4 wt% of PVdF-CTFE was coated on the lower coating layer to form a continuous coating layer having a thickness of 0.5 µm. That is, the thickness of the upper coating layer portion corresponds to 11% of the total thickness of the porous coating layer.

### Test Example 1: Measurement of wettability of batteries with electrolyte solution

A stacks cell was fabricated using each of the separators produced in Examples 1-2 and Comparative Example 1 by the following procedure. First, an anode was interposed between two sheets of separators. Then, cathodes were positioned on both outer surfaces of the separators, followed by lamination at a temperature of 100 °C to fabricate a stack cell.

One edge of the stack cell was dipped in an electrolyte solution. Two hours after dipping, the height of the electrolyte solution impregnated into the stack cell was measured. The results are shown in Table 1.

**TABLE 1**

| | Height of electrolyte solution impregnated (mm) |
|---|---|
| Example 1 | 92 |
| Example 2 | 84 |
| Comparative Example 1 | 67 |

As can be seen from the results in Table 1, the heights of the electrolyte solution impregnated into the stack cells using the separators of Examples 1-2 and Comparative Example 1 were 92 mm, 84 mm and 67 mm, respectively. These results indicate that the stack cells using the separators of Examples 1-2, each of which had grooves formed on the surface thereof, were better in terms of electrolyte solution wettability than the stack cell using the separator of Comparative Example 1.

## Claims

1. A separator (1.00) for a battery comprising
a porous substate (10), a porous coating layer formed on at least one surface of the porous substrate (10) and comprising a mixture of inorganic particles and a binder polymer,
wherein the porous substrate (10) is a porous polyolefin substrate,
**characterised by** a continuous or discontinuous patterned layer present on the surface of the porous coating layer, wherein the patterned layer comprises coated portions and uncoated portions on said coating layer,
the uncoated portions form continuous grooves (30) between the coated portions to allow an electrolyte solution to permeate therethrough, wherein the grooves (30) are in the form of continuous, concave and elongated lines from one cut surface of the separator (100) to the opposite cut surface thereof, wherein the grooves (30) have a depth corresponding to 1 to 20% of the sum of the thicknesses of the porous coating layer and the patterned layer and have a width of 0.1 to 50 mm.

2. The separator (100) according to claim 1, wherein the porous polyolefin substrate is made of a polymer selected from the group consisting of polyethylene, polypropylene, polybutylene and polypentene.

3. The separator (100) according to claim 1, wherein the inorganic particles are selected from the group consisting of inorganic particles having a dielectric constant of at least 5, inorganic particles having the agility to transport lithium ions, and mixtures thereof.

4. The separator (100) according to claim 3, wherein the inorganic particles having a dielectric constant of at least 5 arc selected from the group consisting of BaTiO₃, Pb(Zrₓ,Ti₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})O₃₋ₓPbTiO₃ (PMN-PT, 0 < x < 1), hafnia (HfO₂), SrTiO₃, SnO₂, CeO₂, MgO, NiO, CaO, ZnO, ZrO₂, SiCO₂, Y₂O₃, Al₂O₃, SiC, TiO₂ particles, and mixtures thereof.

5. The separator (100) according to claim 3, wherein the inorganic particles having the ability to transport lithium ions are selected from the group consisting of lithium phosphate (Li₃PO₄) particles, lithium titanium phosphate (LiₓTi_{y}(PO₄)₃, 0 < x < 2, 0 < y < 3) particles, lithium, aluminum titanium phosphate (LiₓAl_{y}Ti_{z}(PO₄)₃, 0 < x < 2, 0 < y < 1, 0 < z < 3) particles, (LiAlTiP)ₓO_{y} type glass (0 < x < 4, 0 < y < 13) particles, lithium lanthanum titanate (LiₓLa_{y}TiO₃, 0 < x < 2, 0 < y < 3) particles, lithium germanium thiophosphate (LiₓGe_{y}P_{z}S_{w}, 0 < x < 4, 0 < y < 1, 0 < z < 1, 0 < w < 5) particles, lithium nitride (LiₓN_{y}, 0 < x < 4, 0 < y < 2) particles, SiS₂ type glass (LiₓSi_{y}S_{z}, 0 < x < 3, 0 < y < 2, 0 < z < 4) particles, P₂S₅ type glass (LiₓP_{y}S_{z}, 0 < x < 3, 0 < y < 3, 0 < z < 7) particles, and mixtures thereof.

6. The separator (100) according to claim 1, wherein the binder polymer is selected from the group consisting of polyvinylidene fluoride-co-hexafluoropropylene, polyvinylidene fluoride-co-trichloroethylene, polymethyl methacrylate, polybutyl acrylate, polyacrylonitrile, polyvinylpyrrolidone, polyvinyl acetate, polyvinyl alcohol, polyethylene-co-vinyl acetate, polyethylene oxide, polyarylate, styrene butadiene rubber, cellulose, acetate, cellulose acetate butyrate, cellulose acetate propionate, cyanoethylpullulan, cyanoethyl polyvinyl alcohol, cyanoethyl cellulose, cyanoethyl sucrose, pullulan, carboxylmethyl cellulose, low molecular weight compounds having a molecular weight of 10,000 g/mol or lower, and mixtures thereof.

7. The separator (100) according to claim 1, wherein the inorganic particles and the binder polymer are used in a weight, ratio of 50:50 to 99:1.

8. An electrochemical device comprising a cathode, an anode and the separator (100) according to any one of claims 1 to 7 interposed between the cathode and the anode.

9. The electrochemical device according to claim 8, wherein the electrochemical device is a lithium secondary battery.

10. The separator (100) according to claim 1,
wherein the coating layer (20) includes pores originated from interstitial volumes created between the inorganic particles in contact with each other, and a weight ratio of the inorganic particles to the binder polymer in the coating layer is 50:50 to 99:1.

## Patentansprüche

1. Separator (100) für eine Batterie, umfassend:
ein poröses Substrat (10), eine poröse Beschichtungsschicht, die auf wenigstens einer Oberfläche des porösen Substrats (10) gebildet ist und eine Mischung aus anorganischen Teilchen und einem Bindemittelpolymer umfasst,
wobei das poröse Substrat (10) ein poröses Polyolefinsubstrat ist,
**gekennzeichnet durch**
eine kontinuierliche oder diskontinuierliche gemusterte Schicht, die auf der Oberfläche der porösen Beschichtungsschicht vorhanden ist,
wobei die gemusterte Schicht beschichtete Bereiche und unbeschichtete Bereiche auf der Beschichtungsschicht umfasst,
wobei die unbeschichteten Bereiche kontinuierliche Rillen (30) zwischen den beschichteten Bereichen bilden, um es einer Elektrolytlösung zu erlauben, hindurch zu permeieren, wobei die Rillen (30) in der Form von kontinuierlichen, konkaven und gestreckten Linien von einer Schnittfläche des Separators (100) zu der gegenüberliegenden Schnittfläche desselben sind, wobei die Rillen (30) eine Tiefe aufweisen, die 1 bis 20% der Summe der Dicken der porösen Beschichtungsschicht und der gemusterten Schicht entspricht, und eine Breite von 0,1 bis 50 mm aufweisen.

2. Separator (100) nach Anspruch 1, wobei das poröse Polyolefinsubstrat hergestellt ist aus einem Polymer ausgewählt aus der Gruppe bestehend aus Polyethylen, Polypropylen, Polybutylen und Polypenten.

3. Separator (100) nach Anspruch 1, wobei die anorganischen Teilchen ausgewählt sind aus der Gruppe bestehend aus anorganischen Teilchen mit einer Dielektrizitätskonstanten von wenigstens 5, anorganischen Teilchen mit der Fähigkeit zum Transport von Lithiumionen und Mischungen derselben.

4. Separator (100) nach Anspruch 3, wobei die anorganischen Teilchen mit einer Dielektrizitätskonstanten von wenigstens 5 ausgewählt sind aus der Gruppe bestehend aus Teilchen von BaTiO₃, Pb(Zrₓ, Ti₁₋ₓ)O₃ (PZT, 0 < x < 1), Pb₁₋ₓLaₓZr_{1-y}TiyO₃ (PLZT, 0 < x < 1, 0 < y < 1), (1-x)Pb(Mg_{1/3}Nb_{1/3})O₃₋ₓPbTiO₃ (PMN-PT, 0 < x < 1), Hafniumoxid (HfO₂), SrTiO₃, SnO₂, CeO₂, MgO, NiO, CaO, ZnO, ZrO₂, SiO₂, Y₂O₃, Al₂O₃, SiC, TiO₂, und Mischungen derselben.

5. Separator (100) nach Anspruch 3, wobei die anorganischen Teilchen mit der Fähigkeit zum Transport von Lithiumionen ausgewählt sind aus der Gruppe bestehend aus Teilchen von Lithiumphosphat (Li₃PO₄), Lithium-Titan-Phosphat (LiₓTi_{y}(PO₄)₃, 0 < x < 2, 0 < y < 3), Lithium-Aluminium-Titan-Phosphat (LiₓAl_{y}Ti_{z}(PO₄)₃, 0 < x < 2, 0 < y < 1, 0 < z < 3), glasartigem (LiAlTiP)ₓO_{y} (0 < x < 4, 0 < y < 13), Lithium-Lanthan-Titanat (LiₓLa_{y}TiO₃, 0 < x < 2, 0 < y < 3), Lithium-Germanium-Thiophosphat (LiₓGeyPₓS_{w}, 0 < x < 4, 0 < y < 1, 0 < z < 1, 0 < w < 5), Lithiumnitrid (LiₓN_{y}, 0 < x < 4, 0 < y < 2), glasartigem SiS₂ (LiₓSi_{y}S_{z}, 0 < x < 3, 0 < y < 2, 0 < z < 4), glasartigem P₂S₅(LiₓP_{y}S_{z}, < x < 3, 0 < y < 3, 0 < z < 7) und Mischungen derselben.

6. Separator (100) nach Anspruch 1, wobei das Bindemittelpolymer ausgewählt ist aus der Gruppe bestehend aus Polyvinylidenfluorid-co-hexafluorpropylen, Polyvinylidenfluorid-co-trichlorethylen, Polymethylmethacrylat, Polybutylacrylat, Polyacrylnitril, Polyvinylpyrrolidon, Polyvinylacetat, Polyvinylalkohol, Polyethylen-co-vinylacetat, Polyethylenoxid, Polyarylat, Styrol-Butadien-Kautschuk, Celluloseacetat, Celluloseacetatbutyrat, Celluloseacetatpropionat, Cyanoethylpullulan, Cyanoethylpolyvinylalkohol, Cyanoethylcellulose, Cyanoethylsaccharose, Pullulan, Carboxylmethylcellulose, niedermolekulargewichtigen Verbindungen mit einem Molekulargewicht von 10.000 g/mol oder weniger und Mischungen derselben.

7. Separator (100) nach Anspruch 1, wobei die anorganischen Teilchen und das Bindemittelpolymer in einem Gewichtsverhältnis von 50:50 bis 99:1 verwendet werden.

8. Elektrochemische Vorrichtung umfassend eine Kathode, eine Anode und den Separator (100) nach einem der Ansprüche 1 bis 7, der zwischen der Kathode und der Anode eingefügt ist.

9. Elektrochemische Vorrichtung nach Anspruch 8, wobei die elektrochemische Vorrichtung eine Lithiumsekundärbatterie ist.

10. Separator (100) nach Anspruch 1, wobei die Beschichtungsschicht (20) Poren einschließt, die aus Hohlvolumina stammen, die zwischen den anorganischen Teilchen in Kontakt miteinander erzeugt werden, und ein Gewichtsverhältnis der anorganischen Teilen zum Bindemittelpolymer in der Beschichtungsschicht 50:50 bis 99:1 ist.

## Revendications

1. Un séparateur (100) destiné à une batterie, comprenant un substrat poreux (10), une couche de revêtement poreuse formée sur une ou plusieurs surfaces du substrat poreux (10) et comprenant un mélange de particules inorganiques et d'un liant polymère,
dans lequel le substrat poreux (10) est un substrat de polyoléfine poreux, **caractérisé par**
une couche à motif continu ou discontinu présente sur la surface de la couche de revêtement poreuse,
dans lequel la couche à motif comprend des parties revêtues et des parties non revêtues sur ladite couche de revêtement,
les parties non revêtues forment des rainures continues (30) entre les parties revêtues afin de permettre à une solution électrolytique de s'y imprégner, dans lequel les rainures (30) ont la forme de lignes continues, concaves et allongées allant d'une surface coupée du séparateur (100) à la surface coupée opposée de celles-ci,
dans lequel les rainures (30) ont une profondeur correspondant à entre 1 et 20% de la somme des épaisseurs de la couche de revêtement poreuse et de la couche à motif et ont une largeur comprise entre 0,1 et 50 mm.

2. Le séparateur (100) selon la revendication 1, dans lequel le substrat de polyoléfine poreux est fabriqué dans un polymère sélectionné dans le groupe constitué par le polyéthylène, le polypropylène, le polybutylène et le polypentène.

3. Le séparateur (100) selon la revendication 1, dans lequel les particules inorganiques sont sélectionnées dans le groupe constitué par des particules inorganiques ayant une constante diélectrique d'au moins 5, les particules inorganiques ayant la capacité de transporter des ions de lithium, et des mélanges de celles-ci.

4. Le séparateur (100) selon la revendication 3, dans lequel les particules inorganiques ayant une constante diélectrique d'au moins 5 sont sélectionnées dans le groupe constitué par des particules de BaTiO₃, Pb(Zrₓ,Ti₁₋ₓ)O₃ (PZT, 0 < x < 1), Pb₁₋ₓLaₓZr_{1-y}Ti_{y}O₃ (PLZT, 0 < x < 1, 0 < y <1), (1-x) Pb (Mg_{1/3}Nb_{2/3)}O_{3 x} PbTiO₃ (PMN-PT, 0 < x < 1), d'hafnium (HfO₂), de SrTiO₃, SnO₂, CeO₂, MgO, NiO, CaO, ZnO, ZrO₂, Si₂O₃, Y₂O₃, Al₂O₃, SiC, TiO₂, et des mélanges de celles-ci.

5. Le séparateur (100) selon la revendication 3, dans lequel les particules inorganiques ayant la capacité de transporter des ions de lithium sont sélectionnées dans le groupe constitué par des particules de lithium phosphate (Li₃PO₄), des particules de phosphate de lithium titane (LiₓTi_{y}(PO₄)₃, 0 < x < 2, 0 < y < 3), des particules de phosphate de lithium aluminum titane (LiₓAl_{y}Ti_{z}(PO₄)₃, 0 < x < 2, 0 < y < 1, 0 < z < 3), des particules de verre de type (LiAlTiP)ₓO_{y}(0 < x < 4, 0 < y < 13), des particules de titanate de lithium lanthane (LiₓLa_{y}TiO₃, 0 < x < 2, 0 < y < 3), des particules de thiophosphate de lithium germanium (LiₓGe_{y}P_{z}S_{w}, 0 < x < 4, 0 < y < 1, 0 < z < 1, 0 < w < 5), des particules de nitrure de lithium (LiₓN_{y}, 0 < x < 4, 0 < y < 2), des particules de verre de type SiS₂ (LiₓSi_{y}S_{z,}, 0 < x < 3, 0 < y < 2, 0 < z < 4), des particules de verre de type P₂S₅ (LiₓP_{y}S_{z}, 0 < x < 3, 0 < y < 3, 0 < z < 7), et des mélanges de celles-ci.

6. Le séparateur (100) selon la revendication 1, dans lequel le liant polymère est sélectionné dans le groupe constitué par des particules de fluorure-co-hexafluoropropylène de polyvinylidène, fluorure-co-trichloroéthylène de polyvinylidène, méthacrylate de polyméthyle, acrylate de polybutyle, polyacrylonitrile, polyvinylpyrrolidone, polyvinylacétate, alcool de polyvinyle, acétate de polyéthylène-co-vinyle, oxyde de polyéthylène, polyarylate, caoutchouc de styrène-butadiène, acétate de cellulose, butyrate d'acétate de cellulose, propionate d'acétate de cellulose, cyanoéthylpullulan, alcool de polyvinyle cyanoéthyle, cellulose de cyanoéthyle, sucrose de cyanoéthyle, pullulan, cellulose de carboxylméthyle, composés à faible poids moléculaire ayant un poids moléculaire égal ou inférieur à 10 000 g/mol, et des mélanges de celles-ci.

7. Le séparateur (100) selon la revendication 1, dans lequel les particules inorganiques et le liant polymère sont utilisés dans un rapport de poids compris entre 50:50 et 99:1.

8. Un dispositif électrochimique comprenant une cathode, une anode et le séparateur (100) selon l'une quelconque des revendications 1 à 7 interposé entre la cathode et l'anode.

9. Le dispositif électrochimique selon la revendication 8, dans lequel le dispositif électrochimique est une batterie secondaire au lithium.

10. Le séparateur (100) selon la revendication 1,
dans lequel la couche de revêtement (20) inclut des pores provenant de volumes interstitiels créés entre les particules inorganiques en contact les unes avec les autres, et un rapport de poids des particules inorganiques au liant polymère dans la couche de revêtement est compris entre 50:50 et 99:1.
